# EUROPÄISCHE PATENTSCHRIFT

(11) **EP 3 658 800 B1**
(45) Veröffentlichungstag und Bekanntmachung des Hinweises auf die Patenterteilung: **16.03.2022**
(21) Anmeldenummer: 18738281.7
(22) Anmeldetag: 04.07.2018
(51) Int. Cl.: F16H 63/18, F16H 63/02, F16H 61/688

(54) **SCHALTWALZE UND KRAFTFAHRZEUG-SCHALTGETRIEBE**
SELECTOR DRUM AND MOTOR-VEHICLE MANUAL TRANSMISSION
BARILLET DE SÉLECTION ET BOÎTE DE VITESSES AUTOMATISÉE DE VÉHICULE À MOTEUR

(30) Priorität: 28.07.2017 DE 102017117171
(43) Veröffentlichungstag der Anmeldung: 03.06.2020
(73) Patentinhaber: Magna PT B.V. & Co. KG, 74199 Untergruppenbach (DE)
(72) Erfinder: KAPP, Stefan, 74399 Walheim (DE)
(74) Vertreter: Rausch, Gabriele
(86) Internationale Anmeldenummer: PCT/EP2018/068160
(87) Internationale Veröffentlichungsnummer: WO 2019/020334

(56) Entgegenhaltungen:
- DE-A1- 10 128 854
- DE-A1-102004 058 475
- DE-A1-102010 049 860
- DE-C- 708 872

## Beschreibung

Die vorliegende Erfindung betrifft eine Schaltwalze für ein automatisiertes Schaltgetriebe, insbesondere Doppelkupplungsgetriebe, mit einem Schaltwalzenkörper, der um eine Drehachse drehbar in dem Schaltgetriebe montierbar ist, wobei an dem Schaltwalzenkörper wenigstens eine Schaltkontur ausgebildet ist, die sich über einen Umfangsabschnitt des Schaltwalzenkörpers erstreckt, wobei die Schaltwalze zum Schalten von wenigstens einer hohen Gangstufe, einer mittleren Gangstufe und einer niedrigen Gangstufe ausgebildet ist, wobei die wenigstens eine Schaltkontur in einem Bereich von einem Weichen-Gangabschnitt eine Schaltkonturweiche aufweist.

Ferner betrifft die vorliegende Erfindung ein Schaltgetriebe für ein Kraftfahrzeug, mit einer Eingangswellenanordnung, einer Ausgangswellenanordnung und einer Mehrzahl von Radsätzen, die mittels einer Schaltanordnung schaltbar sind, wobei die Schaltanordnung eine Schaltwalze des oben genannten Typs aufweist.

Aus dem Dokument DE 103 61 356 B4 ist eine Schaltwalze bekannt, bei der eine Umfangsnut Flanken aufweist, wobei ein axial beweglich gelagerter Flankenabschnitt dazu ausgebildet ist, um einen eingelegten Gang unter Vorspannung auszulegen.

Das Dokument DE 10 2012 020 426 A1 offenbart eine Schaltwalze für eine Schaltanordnung eines Doppelkupplungsgetriebes, wobei die Schaltwalze so ausgeführt ist, dass sequentielle Hoch- und Rückschaltungen sowie Mehrfach-Rückschaltungen realisierbar sind, wobei die Schaltwalze einen axial nicht verschiebbaren aber drehbaren ersten Schaltwalzenteil und einen zweiten Schaltwalzenteil aufweist, der auf dem ersten Schaltwalzenteil axial verschiebbar gelagert ist. An dem ersten Schaltwalzenteil sind mehrere Schaltkulissen ausgebildet. An dem zweiten Schaltwalzenteil sind eine Schaltkulisse und zwei alternativ aktivierbare Steuerkulissen ausgebildet, durch die die Schaltkulisse des zweiten Schaltwalzenteils entweder für die sequentiellen Schaltungen oder für eine zugkraftunterbrechungsfreie Mehrfach-Rückschaltung ausgelegt ist. Für Mehrfach-Rückschaltungen ist die Schaltkulisse des zweiten Schaltwalzenteils der niedrigen Zielgangstufe zugeordnet.

Ferner offenbart das Dokument DE 10 2004 058 475 B4 eine Aktuatoranordnung für ein Doppelkupplungsgetriebe mit zwei Schaltwalzen, wobei wenigstens eine der Schaltwalzen zwei Steuerkurven aufweist, von denen eine einem ersten Teilgetriebe des Doppelkupplungsgetriebes zugeordnet ist und von denen die andere einem zweiten Teilgetriebe des Doppelkupplungsgetriebes zugeordnet ist. Auch ist hier vorgesehen, dass ein Gang-Umfangsabschnitt eines Rückwärtsganges für einen Kurvenfolger nur in einer Drehrichtung über eine passive Weiche der zugeordneten Steuerkurve erreichbar ist.

In der älteren Patentanmeldung mit dem Aktenzeichen DE 10 2016 124 403.1 ist eine Schaltwalze mit einer integrierten aktiven Schaltkonturweiche offenbart, die bei Mehrfach-Rückschaltungen genutzt wird.

Bei Doppelkupplungsgetrieben, die Schaltanordnungen mit einer oder mehreren Schaltwalzen aufweisen, erfordern Mehrfach-Rückschaltungen und -Hochschaltungen aufgrund der generell sequentiellen Anordnung der Gangstufen an den Schaltwalzen immer das Durchfahren bzw. Synchronisieren anderer Gangstufen. Dies führt generell zu langen Schaltzeigen bzw. langen Schlupfzeiten der Doppelkupplungsanordnung.

Wie erwähnt, ist es bekannt, Schaltwalzen mit passiven Weichen auszugestalten. Passive Weichen sind vergleichsweise einfach realisierbar.

Aktive Weichen sind hingegen relativ komplex aufgebaut, was zu hohen Kosten führt.

DE 10 2020 049 860 A1 zeigt einen Schaltmechanismus für ein Doppelkupplungsgetriebe, der eine rotierende Kurventrommel mit mindestens drei Führungsbahnen verwendet, die mit mindestens drei zugehörigen Kurvenstößeln in Eingriff stehen und diese verlagern. Die Kurvenstößel erstrecken sich von Schaltgabelkörpern, die an Schienen gleiten und Schaltgabeln umfassen, die mindestens drei Synchronkupplungen bidirektional verlagern, die mindestens fünf Vorwärtsgänge oder -drehzahlen und einen Rückwärtsgang einlegen. Ein einzelner Elektromotor und Zahnradsatz treiben die Kurventrommel an. DE 10 128854 zeigt ein Gang-Wechselgetriebe für Kraftfahrzeuge, welches eine Schaltwalze mit einer einzelnen Schaltkontur aufweist, in welcher mehrere Mitnehmer geführt sind, wobei die Mitnehmer jeweils für das Schalten von zwei verschiedene Gangstufen verwendet werden.

Vor diesem Hintergrund ist es eine Aufgabe der Erfindung, eine verbesserte Schaltwalze für ein Kraftfahrzeug-Schaltgetriebe sowie ein verbessertes Schaltgetriebe für Kraftfahrzeuge anzugeben.

Die obige Aufgabe wird gelöst durch eine Schaltwalze für ein Doppelkupplungsgetriebe, nach Anspruch 1. Bevorzugte Weiterbildungen sind in den abhängigen Ansprüchen 2-7 definiert.

Ferner wird die Aufgabe gelöst durch ein Doppelkupplungsgetriebe nach Anspruch 8. Eine bevorzugte Ausführungsform des Schaltgetriebes ist im abhängigen Anspruch 9 definiert.

Die vorliegende Erfindung ermöglicht Mehrfach-Rückschaltungen von einer hohen Gangstufe in eine niedrige Gangstufe, ohne dass zwischenzeitlich die mittlere Gangstufe zu schalten bzw. deren Schaltkupplung zu synchronisieren ist. Demzufolge können sehr kurze Zeiten für derartige Mehrfach-Rückschaltungen erreicht werden.

Dies wird auch dadurch erreicht, dass die hohe Gangstufe aufgrund der Ausgestaltung der Schaltkontur noch geschaltet bleiben kann, wenn sich der Mitnehmer der mittleren Gangstufe im Bereich des Weichen-Gangabschnittes befindet, die mittlere Gangstufe jedoch nicht eingelegt wird.

Mit anderen Worten kann erreicht werden, dass bei der Mehrfach-Rückschaltung die hohe Gangstufe solange wie getriebetechnisch möglich eingelegt bleiben kann und erst dann ausgelegt wird, wenn die niedrige Gangstufe einzulegen ist.

Hierdurch kann über einen längeren Zeitraum Zugkraft ohne Kupplungsschlupf auf den Abtrieb übertragen werden (in der hohen Gangstufe), bis dann unmittelbar die hohe Gangstufe ausgelegt und die niedrige Gangstufe eingelegt wird.

Die Kombination eines Weichen-Gangabschnittes und einer Schaltkontur, die eine solche "Verlängerung" des Einlegens der hohen Gangstufe ermöglicht, kann zu besonders kurzen Schaltzeiten für Mehrfach-Rückschaltungen führen.

Der Begriff der Mehrfach-Rückschaltung soll vorliegend Schaltungen von einer hohen in eine niedrige Gangstufe beinhalten, wobei zwischen der hohen Gangstufe und der niedrigen Gangstufe wenigstens eine mittlere Gangstufe liegt.

Sofern vorliegend davon die Rede ist, dass ein Mitnehmer in eine Schaltkontur greift, so ist diese Formulierung breit zu verstehen. Dies kann ein Eingreifen eines Steines oder Stabes in eine Nut sein, kann jedoch auch ein Übergreifen einer stegförmigen Schaltkontur sein, wobei der Mitnehmer bspw. gabelartig ausgebildet ist, oder dergleichen.

Der Begriff des Schaltens ist vorliegend ebenfalls breit zu verstehen. In der Regel ist mit dem Schalten einer Gangstufe entweder ein Ein- oder ein Auslegen dieser Gangstufe gemeint, also das Schalten dieser Gangstufe in den Leistungsfluss oder das Herausnehmen dieser Gangstufe aus dem Leistungsfluss. In manchen Ausführungsformen wird unter einem Schalten einer Gangstufe ausschließlich ein Einlegen dieser Gangstufe verstanden.

Insgesamt kann erreicht werden, dass die hohe Gangstufe lange geschaltet bleiben und Zugkraft übertragen kann, bis die hohe Gangstufe letztlich zwangsläufig ausgelegt und die niedrige Gangstufe anschließend unmittelbar darauffolgend eingelegt wird, um dann Zugkraft über die niedrige Gangstufe übertragen zu können.

In automatisierten Schaltgetrieben mit einer einzelnen eingangsseitigen Reibkupplung erfolgt ein derartiger Vorgang dann mit Zugkraftunterbrechung.

Bei Doppelkupplungsgetrieben ist es generell denkbar, für einen Zeitraum zwischen dem Auslegen der hohen Gangstufe und dem Einlegen der niedrigen Gangstufe Zugkraft über das andere Teilgetriebe zu übertragen.

Die Aufgabe wird vollkommen gelöst.

Die Schaltkupplungsweiche des Weichen-Gangabschnittes kann als aktive Weiche ausgebildet sein, derart, dass ein Weichenkörper mittels eines Getriebes drehrichtungsabhängig in eine von wenigstens zwei unterschiedlichen Axialpositionen an dem Schaltwalzenkörper ausgelenkt wird.

Von besonderem Vorzug ist es jedoch, wenn die Schaltkonturweiche des Weichen-Gangabschnittes als passive Weiche ausgebildet ist.

In dieser Ausführungsform ist ein Weichenkörper der Schaltkonturweiche vorzugsweise mittels einer Feder in eine Grundposition vorgespannt, bei der der Mitnehmer der mittleren Gangstufe in der ersten Drehrichtung von dem Weichenkörper in die Gangstellung ausgelenkt wird. In der zweiten Drehrichtung drückt der Mitnehmer der mittleren Gangstufe den Weichenkörper dann vorzugsweise gegen die Vorspannung der Feder in axialer Richtung weg, so dass der Mitnehmer der mittleren Gangstufe bei einem Durchfahren des Weichen-Gangabschnittes in der zweiten Drehrichtung nicht in die Gangstellung gelangt, die der mittleren Gangstufe entspricht. Folglich wird die mittlere Gangstufe dann nicht eingelegt bzw. geschaltet.

Gemäß einer weiteren insgesamt bevorzugten Ausführungsform weist die wenigstens eine Schaltkontur einen axial verbreiteten Abschnitt auf, der vorzugsweise in Umfangsrichtung benachbart ist zu dem Weichen-Gangabschnitt.

Durch den axial verbreiterten Abschnitt ist es möglich, die hohe Gangstufe geschaltet zu lassen, wenn der Schaltwalzenkörper in der zweiten Drehrichtung bewegt wird und wenn sich ein Mitnehmer, der der mittleren Gangstufe zugeordnet ist, in einem Bereich des Weichen-Gangabschnittes befindet.

Die axiale Breite des verbreiterten Abschnittes beträgt wenigstens das 1,5-fache der axialen Breite des Mitnehmers bzw. des Restes der Schaltkontur. Vorzugsweise liegt die axiale Breite des axial verbreiterten Abschnittes in einem Bereich von dem 1,8- bis 2,2-fachen der Breite des Mitnehmers bzw. dem Rest der Schaltkontur.

In der erfindungsgemäßen Ausgestaltung nach Anspruch 1 greifen zwei Mitnehmer in eine einzelne Schaltkontur.

Dies hat den Vorteil, dass bestimmte Gangabschnitte sowohl von dem einen Mitnehmer als auch den anderen Mitnehmer benutzt werden können.

Die Schaltwalze kann in axialer Richtung kompakter realisiert werden.

Bei der erfindungsgemäßen Lösung nach Anspruch 1, weist die wenigstens eine Schaltkontur eine Einzelschaltkontur auf, in die ein erster Mitnehmer und ein zweiter Mitnehmer greifen, wobei der erste Mitnehmer der hohen Gangstufe zugeordnet ist, und wobei der zweite Mitnehmer der mittleren Gangstufe zugeordnet ist.

Bei einer Ausführungsform ist die hohe Gangstufe beispielhaft die Vorwärtsgangstufe 6, die mittlere Gangstufe ist beispielhaft die Vorwärtsgangstufe 4 und die niedrige Gangstufe ist beispielhaft die Vorwärtsgangstufe 2.

In manchen Ausführungsformen kann der zweite Mitnehmer ferner einer Rückwärtsgangstufe zugeordnet sein.

Ferner ist es bei dieser Ausführungsform bevorzugt, wenn die Einzelschaltkontur einen Gangabschnitt mit einer Schaltkonturweiche aufweist, der in einer ersten Drehstellung den Weichen-Gangabschnitt bildet, der der mittleren Gangstufe zugeordnet ist, und der in einer zweiten Drehstellung einen Gangabschnitt für die hohe Gangstufe bildet.

Hierbei ist vorzugsweise vorgesehen, dass in der ersten Drehstellung der zweite Mitnehmer innerhalb des Gangabschnittes ausgelegt ist, um die mittlere Gangstufe einzulegen, und dass in der zweiten Drehstellung der erste Mitnehmer im Bereich dieses Gangabschnittes ausgelenkt ist, um die hohe Gangstufe einzulegen.

Dabei ist es von besonderem Vorzug, wenn eine Verdrehbarkeit des Schaltwalzenkörpers begrenzt ist, derart, dass der erste Mitnehmer in einer ersten Drehrichtung maximal bis zu dem Weichen-Gangabschnitt gelangt.

Hierdurch wird erreicht, dass die Schaltkonturweiche für die hohe Gangstufe quasi nicht wirksam ist, da der erste Mitnehmer für die hohe Gangstufe nicht über diesen Weichen-Gangabschnitt hinaus verdreht wird, so dass der erste Mitnehmer für die hohe Gangstufe in der zweiten Drehrichtung den Weichen-Gangabschnitt niemals "umfahren" kann.

Gemäß einer weiteren bevorzugten Ausführungsform sind die Einzelschaltkontur und der zweite Mitnehmer so aufeinander abgestimmt, dass der zweite Mitnehmer, bei einer Verdrehung des Schaltwalzenkörpers in der zweiten Drehrichtung aus dem Weichen-Gangabschnitt heraus, in einem verbreiterten Abschnitt der Einzelschaltkontur axial versetzt wird, um die mittlere Gangstufe auszulegen bevor die niedrige Gangstufe geschaltet bzw. eingelegt wird.

Durch diese Ausgestaltung wird gewährleistet, dass der erste Mitnehmer bei Verdrehung in der zweiten Drehrichtung in dem verbreiterten Abschnitt der Einzelschaltkontur in einer Axialposition verbleiben kann, so dass die hohe Gangstufe eingelegt bleibt, während sich der Mitnehmer für die mittlere Gangstufe im Bereich des Weichen-Gangabschnittes befindet. Dies ermöglicht es, eine schnelle Mehrfach-Rückschaltung ohne Einlegen der mittleren Gangstufe durchzuführen.

Andererseits ist dafür zu sorgen, dass bei einer Ausgangssituation, bei der sich der zweite Mitnehmer für die mittlere Gangstufe im Bereich des Weichen-Gangabschnittes befindet, und zwar bei eingelegter mittlerer Gangstufe, eine anschließende Drehrichtungsumkehr nicht dazu führen kann, dass die mittlere Gangstufe und die niedrige Gangstufe gleichzeitig eingelegt sind.

Zu diesem Zweck weist die Schaltwalze im Bereich des verbreiterten Abschnittes der Einzelschaltkontur vorzugsweise einen Auslegesteg auf, der zur Zusammenwirkung mit dem zweiten Mitnehmer ausgebildet ist. Der Auslegesteg wirkt folglich selektiv, indem er den zweiten Mitnehmer bei der zweiten Drehrichtung axial versetzt, um die mittlere Gangstufe auszulegen, bevor die niedrige Gangstufe geschaltet wird. Der Auslegesteg wirkt jedoch vorzugsweise nicht auf den ersten Mitnehmer, so dass der erste Mitnehmer geschaltet bleiben kann, während sich der zweite Mitnehmer in dem Bereich des Weichen-Gangabschnittes befindet, ohne jedoch die zugeordnete mittlere Gangstufe einzulegen.

Ausführungsbeispiele der Erfindung sind in der Zeichnung dargestellt und werden in der nachfolgenden Beschreibung näher erläutert. Es zeigen:
Fig. 1 eine schematische Darstellung eines Doppelkupplungsgetriebes mit zwei Teilgetrieben und zwei Schaltwalzen;
Fig. 2 eine nicht erfindungsgemäße schematische Abwicklung einer Schaltwalze für ein Doppelkupplungsgetriebe der in Fig. 1 gezeigten Art in einem Ausgangszustand, bei dem eine niedrige Gangstufe eingelegt ist;
Fig. 3 die Abwicklung der Fig. 2 in einen Übergangszustand zwischen einem Schaltzustand der niedrigen und der mittleren Gangstufe;
Fig. 4 die Abwicklung der Fig. 2 in einem Zustand, bei dem die mittlere Gangstufe eingelegt ist;
Fig. 5 die Abwicklung der Fig. 2 in einem Zustand, bei dem die mittlere Gangstufe ausgelegt ist und eine hohe Gangstufe noch nicht eingelegt ist;
Fig. 6 die Abwicklung der Fig. 2, wobei die hohe Gangstufe eingelegt ist;
Fig. 7 die Abwicklung der Fig. 2 in einem Zustand, bei dem die hohe Gangstufe aufgrund eines verbreiterten Abschnittes einer Schaltkontur eingelegt bleibt, während sich ein Mitnehmer der mittleren Gangstufe in einem Weichen-Gangabschnitt befindet, bei dem die mittlere Gangstufe nicht eingelegt ist;
Fig. 8 die Abwicklung der Fig. 2 ausgehend von dem Zustand der Fig. 7, bei dem die mittlere Gangstufe und die hohe Gangstufe ausgelegt sind;
Fig. 9 die Abwicklung der Fig. 2 in einer von Fig. 8 ausgehenden Darstellung, bei der die niedrige Gangstufe eingelegt ist und die hohe Gangstufe ausgelegt ist, wobei die Darstellung der Fig. 9 jener der Fig. 2 entspricht;
Fig. 10 eine nicht erfindungsgemäße schematische Längsschnittansicht durch eine Ausführungsform einer Schaltwalze, die hinsichtlich Aufbau und Funktion der Schaltwalze der Figuren 2 bis 9 entspricht;
Fig. 11 eine perspektivische Darstellung der Schaltwalze der Fig. 10;
Fig. 12 eine schematische Darstellung der erfindungsgemäßen Ausführungsform einer Schaltwalze mit einer Einzelschaltkontur, in die zwei Mitnehmer greifen, und zwar in einen Zustand, bei dem eine niedrige Gangstufe 2 eingelegt ist;
Fig. 13 die Schaltkontur der Fig. 12 in einem Zustand, bei dem keine Gangstufe eingelegt ist.
Fig. 14 die Schaltkontur der Fig. 12, wobei eine mittlere Gangstufe eingelegt ist;
Fig. 15 die Schaltkontur der Fig. 12, wobei keine Gangstufe eingelegt ist;
Fig. 16 die Schaltkontur der Fig. 12, wobei eine hohe Gangstufe eingelegt ist;
Fig. 17 die Schaltkontur der Fig. 12 in einer Situation während einer Mehrfach-Rückschaltung, wobei die hohe Gangstufe nach wie vor eingelegt ist, während sich ein Mitnehmer für eine mittlere Gangstufe in einem Bereich eines Weichen-Gangabschnittes befindet;
Fig. 18 die Schaltkontur der Fig. 12, wobei bei fortgesetzter Drehung in der zweiten Drehrichtung keine Gangstufe eingelegt ist;
Fig. 19 die Schaltkontur der Fig. 12, wobei die niedrige Gangstufe eingelegt ist, also ein Zustand gezeigt ist, der jener der Fig. 12 entspricht;
Fig. 20 eine erfindungsgemäße schematische teilweise weggebrochene, perspektivische Ansicht einer Ausführungsform einer Schaltwalze, die hinsichtlich Aufbau und Funktion der Schaltwalze der Figuren 12 bis 19 entspricht;
Fig. 21 eine weitere teilweise weggebrochene schematische perspektivische Ansicht der Schaltwalze der Fig. 20; und
Fig. 22 eine perspektivische Detailansicht der Schaltwalze der Figuren 20 und 21.

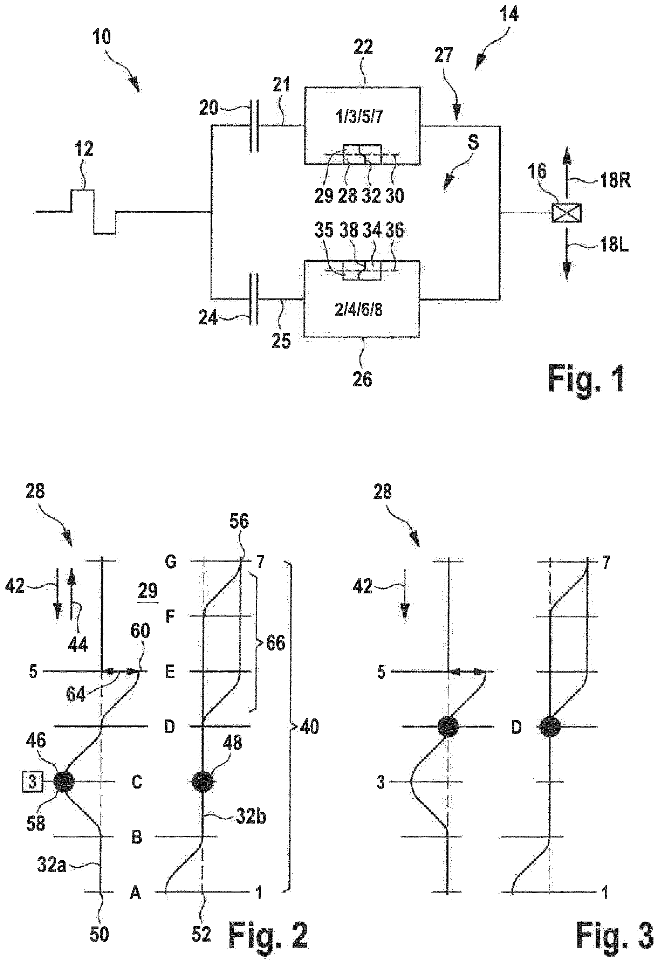

In Fig. 1 ist in schematischer Form ein Antriebsstrang für ein Kraftfahrzeug dargestellt und generell mit 10 bezeichnet. Der Antriebsstrang 10 beinhaltet einen Antriebsmotor 12, wie bspw. einen Verbrennungsmotor oder eine Hybrid-Antriebseinheit. Generell könnte der Antriebsmotor 12 auch ein Elektromotor sein.

Der Antriebsstrang 10 weist ferner ein Doppelkupplungsgetriebe 14 auf, das eingangsseitig mit dem Antriebsmotor 12 verbunden ist und das ausgangsseitig mit einem Differential 16 verbunden ist, mittels dessen Antriebsleistung auf angetriebene Räder 18L, 18R verteilbar ist.

Das Doppelkupplungsgetriebe 14 weist eine erste Reibkupplung 20 auf, die eingangsseitig mit dem Antriebsmotor 12 verbunden ist und die ausgangsseitig mit einer ersten Eingangswelle 21 eines ersten Teilgetriebes 22 verbunden ist. Das erste Teilgetriebe 22 ist den ungeraden Vorwärtsgangstufen zugeordnet, und weist bspw. Vorwärtsgangstufen 1, 3, 5, 7, ggf. 9 oder weitere auf.

Ferner beinhaltet das Doppelkupplungsgetriebe 14 eine zweite Reibkupplung 24, die eingangsseitig mit dem Antriebsmotor 12 verbunden ist und die ausgangsseitig mit einer zweiten Eingangswelle 25 eines zweiten Teilgetriebes 26 verbunden ist. Das zweite Teilgetriebe 26 ist vorliegend den geraden Vorwärtsgangstufen zugeordnet, also insbesondere den Vorwärtsgangstufen 2, 4, 6 und ggf. 8. Das zweite Teilgetriebe 26 weist vorzugsweise auch eine Rückwärtsgangstufe auf.

Ausgangsseitig sind das erste Teilgetriebe 22 und das zweite Teilgetriebe 26 mit einer Ausgangswellenanordnung 27 verbunden, die mit dem Differential 16 verbunden ist.

Der Antriebsstrang 10 und das Doppelkupplungsgetriebe 14 weisen eine Steuereinrichtung auf, die vorliegend nicht dargestellt ist. Mittels der Steuereinrichtung können Aktuatoren angesteuert werden, um die Reibkupplungen 20, 24 und die Teilgetriebe 22, 26 zu betätigen.

Zum Zwecke der Betätigung der Teilgetriebe 22, 26 ist eine Schaltanordnung S vorgesehen.

Die Schaltanordnung S dient zum Ein- und Auslegen von Gangstufen der Teilgetriebe 22, 26. Die Gangstufen der Teilgetriebe 22, 26 sind vorzugsweise mittels Schaltkupplungen ein- und auslegbar, die dazu ausgebildet sind, ein Losrad eines Radsatzes mit einer zugeordneten Welle zu verbinden. Die Schaltkupplungen können insbesondere als Synchron-Schaltkupplungen an sich bekannter Bauart ausgebildet sein.

Vorliegend beinhaltet die Schaltanordnung S eine erste Schaltwalze 28, die dem ersten Teilgetriebe 22 zugeordnet ist. Die erste Schaltwalze 28 weist einen ersten Schaltwalzenkörper 29 auf, der um eine erste Drehachse 30 herum drehbar ist. An der ersten Schaltwalze 28 ist wenigstens eine erste Schaltkontur 32 ausgebildet.

Die Schaltanordnung S beinhaltet ferner eine zweite Schaltwalze 34, die dem zweiten Teilgetriebe 26 zugeordnet ist. Die zweite Schaltwalze 34 beinhaltet einen zweiten Schaltwalzenkörper 35, der um eine zweite Drehachse 36 drehbar gelagert ist. An der zweiten Schaltwalze 34 ist wenigstens eine zweite Schaltkontur 38 ausgebildet.

Die Schaltkonturen 32, 38 stehen vorzugsweise in Eingriff mit jeweils wenigstens einem Mitnehmer. Jedem Mitnehmer ist vorzugsweise ein Schaltkupplungspaket zugeordnet, das eine oder zwei Schaltkupplungen aufweist, um eine Gangstufe ein- und auslegen zu können oder um zwei Gangstufen alternativ ein- und auslegen zu können.

Die erste Schaltwalze 28 dient zum Schalten der Gangstufen des ersten Teilgetriebes 22. Die zweite Schaltwalze 34 dient zum Schalten der Gangstufen des zweiten Teilgetriebes 26.

Vorliegend ist die erste Schaltwalze 28 und/oder die zweite Schaltwalze 34 dazu ausgebildet, Mehrfach-Rückschaltungen durchzuführen zu können, und zwar von einer hohen Gangstufe in eine niedrige Gangstufe, ohne dass eine dazwischenliegende mittlere Gangstufe eingelegt wird. Ferner kann die hohe Gangstufe vergleichsweise lange geschaltet bleiben, um einen Zeitpunkt einer Zugkraftunterbrechung vergleichsweise kurz zu halten.

Sofern vorliegend von Mehrfach-Rückschaltungen die Rede ist, so beziehen sich diese auf Mehrfach-Rückschaltungen mittels einer einzelnen Schaltwalze.

Unter einer Mehrfach-Rückschaltung wird vorliegend verstanden, dass zwischen einer Start-Gangstufe (hohe Gangstufe) und einer Zielgangstufe (niedrige Gangstufe) wenigstens eine mittlere Gangstufe liegt, vorzugsweise wenigstens zwei mittlere Gangstufen und vorzugsweise wenigstens drei mittlere Gangstufen. Letzteres wird als Vierfach-Rückschaltung bezeichnet und betrifft bspw. Schaltungen von Gangstufe 7 nach Gangstufe 3 oder von Gangstufe 6 nach Gangstufe 2, also Schaltvorgänge, bei denen bspw. zum Vorbereiten einer Beschleunigung nach der Art eines Kickdowns sehr schnell eine niedrige Gangstufe einzulegen ist, um innerhalb möglichst kurzer Zeit eine sehr große Zugkraft und Beschleunigung für das Kraftfahrzeug bereitstellen zu können.

In Fig. 2 ist eine nicht erfindungsgemäße Ausführungsform einer ersten Schaltwalze 28 gezeigt, die sich bspw. zur Betätigung der Vorwärtsgangstufen des ersten Teilgetriebes 22 des Doppelkupplungsgetriebes 14 der Fig. 1 eignet.

Die Schaltwalze 28 der Fig. 2 weist eine erste Schaltkontur 32a und eine axial hierzu versetzt angeordnete zweite Schaltkontur 32b auf. Die Schaltkonturen 32a, 32b erstrecken sich über einen Umfangsabschnitt 40 der ersten Schaltwalze 28. Der Umfangsabschnitt 40 ist vorzugsweise kleiner als 360°. Der Umfangsabschnitt 40 ist vorzugsweise größer als 180°, insbesondere größer als 270°.

Die zwei Schaltkonturen 32a, 32b können sich über den gleichen Umfangsabschnitt 40 erstrecken, wie es in Fig. 2 dargestellt ist. Sie können jedoch auch in Umfangsrichtung gegeneinander verschoben sein. Dies hängt von der Position von Mitnehmern ab, wie nachstehend noch beschrieben werden wird.

Die Darstellung der Fig. 2 ist eine schematische Darstellung einer Abwicklung der ersten Schaltwalze 28 und es ist gezeigt, dass die Schaltwalze 28 in einer ersten Drehrichtung 42 oder in einer entgegengesetzten zweiten Drehrichtung 44 verdreht werden kann.

Die erste Schaltwalze 28 (und auch die zweite Schaltwalze 34) sind vorzugsweise mittels geeigneter Elektromotoren ansteuerbar, die vorzugsweise unabhängig voneinander in Drehung versetzbar sind.

In die erste Schaltkontur 32a greift ein erster Mitnehmer 46, der vorliegend den Gangstufen 3 und 5 zugeordnet ist, also einer mittleren Gangstufe 5 und einer niedrigen Gangstufe 3. In die zweite Schaltkontur 32b greift ein zweiter Mitnehmer 48, der einer hohen Gangstufe 7 zugeordnet ist, und optional einer Anfahrgangstufe 1, wie in Fig. 2 dargestellt.

Die Schaltkonturen 32a, 32b weisen jeweils eine Neutrallinie 50 bzw. 52 auf. Zum Einrichten der Gangstufe 1 ist ein erster Gangabschnitt 54 an der zweiten Schaltkontur 32b vorgesehen, der sich gegenüber der Neutrallinie 52 nach links versetzt. Zum Einrichten der Vorwärtsgangstufe 7 ist an der zweiten Schaltkontur 32b ein zweiter Gangabschnitt 56 ausgebildet, der sich gegenüber der Neutrallinie 52 nach rechts erstreckt.

Ferner weist die erste Schaltkontur 32a einen dritten Gangabschnitt 58 auf, der der niedrigen Gangstufe zugeordnet ist. Ferner weist die erste Schaltkontur 32a einen vierten Gangabschnitt 60 auf, der der mittleren Gangstufe 5 zugeordnet ist.

Zum besseren Nachvollziehen der jeweiligen Umfangslage ist in Fig. 2 dargestellt, dass der Umfangsabschnitt 40 für die Schaltkonturen 32a, 32b unterteilt in eine Mehrzahl von Positionen A bis G.

Der erste Gangabschnitt 54 liegt auf der Position A. Der dritte Gangabschnitt 58 liegt auf der Position C. Der vierte Gangabschnitt 60 liegt auf der Position E. Der zweite Gangabschnitt 56 liegt auf der Position G. In den Zwischenpositionen B, D, F ist generell (bis auf die nachstehend beschriebene Ausnahme) jeweils keine Gangstufe eingelegt.

Die Schaltwalze 28 weist im Bereich des vierten Gangabschnittes 60 für die mittlere Gangstufe 5 eine Schaltkonturweiche 64 auf. Die Schaltkonturweiche 64 ist so ausgebildet, dass ein in der ersten Schaltkontur 32a geführter Mitnehmer 46 in der ersten Drehrichtung der Schaltwalze 28, also kommend aus der Position D, axial versetzt wird, um die Vorwärtsgangstufe 5 einzulegen.

Die Schaltkonturweiche 64 ist andererseits so ausgebildet, dass der Mitnehmer 46, sofern die Schaltwalze 28 in der zweiten Drehrichtung 44 gedreht wird, ausgehend von der Position F in den vierten Gangabschnitt 60 einfährt und hierbei nicht axial ausgelenkt wird, so dass in der zweiten Drehrichtung 44 die mittlere Gangstufe 5 nicht eingelegt wird.

Zum anderen weist die zweite Schaltkontur 32b zwischen der Position G und der Position D einen verbreiterten Abschnitt 66 auf, der so ausgebildet ist, dass in der zweiten Drehrichtung 44 die hohe Vorwärtsgangstufe 7 eingelegt bleiben kann, während sich der Mitnehmer 46 für die mittlere Gangstufe im Bereich des vierten Gangabschnittes 60 befindet, der vorliegend auch als Weichen-Gangabschnitt bezeichnet wird.

Mit anderen Worten kann die Vorwärtsgangstufe 7 in den Positionen G, F und E eingelegt sein, wenn die Schaltwalze in der zweiten Drehrichtung 44 verdreht wird. Andererseits wird die hohe Gangstufe 7 in den Positionen E und F nicht eingelegt, wenn die Schaltwalze 28 in der ersten Drehrichtung bewegt wird, sich der zweite Mitnehmer 48 also aus der Position D in Richtung der Position G bewegt.

Anhand der nachfolgenden Figuren 3 bis 6 wird zunächst beschrieben, dass die Schaltwalze 28 ausgehend von der in Fig. 2 gezeigten Drehstellung in der ersten Drehrichtung 42 bewegt wird, so dass zunächst die niedrige Gangstufe 3 ausgelegt wird, anschließend die mittlere Gangstufe 5 eingelegt wird, dann die mittlere Gangstufe 5 wieder ausgelegt wird und anschließend die hohe Gangstufe 7 eingelegt wird.

Dies ist in unterschiedlichen Phasen gezeigt, ausgehend von der in Fig. 2 gezeigten Position, bei der sich die Mitnehmer 46, 48 in der Position C befinden, bei der der erste Mitnehmer 46 durch den dritten Gangabschnitt 58 ausgelenkt ist, also die niedrige Vorwärtsgangstufe 3 eingelegt ist. Der zweite Mitnehmer 48 befindet sich auf der Neutrallinie 52.

Ein Verdrehen der Schaltwalze 28 in der ersten Drehrichtung 42 führt dazu, dass die Mitnehmer in die Drehposition D versetzt werden. Dies führt zum Auslegen der niedrigen Gangstufe 3. In der Darstellung der Fig. 3 ist keine Gangstufe eingelegt.

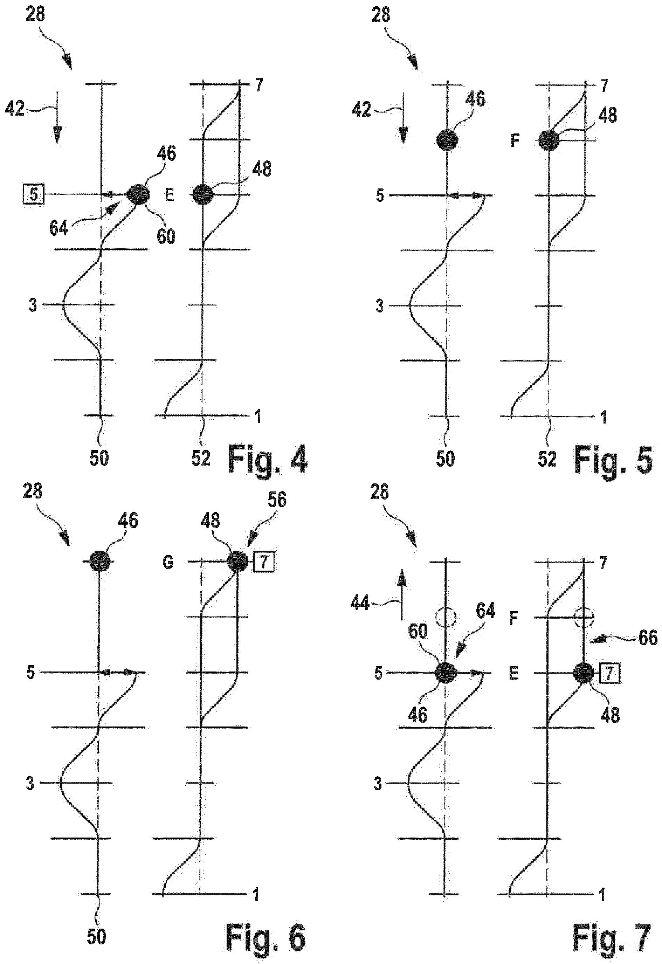

Bei einem Weiterdrehen in der ersten Drehrichtung 42 wird der erste Mitnehmer 46 bei E in den vierten Gangabschnitt 60 ausgelenkt, um die mittlere Vorwärtsgangstufe 5 einzulegen. Der zweite Mitnehmer 48 befindet sich innerhalb des verbreiterten Abschnittes 66 nach wie vor auf der Neutrallinie 52. In der Darstellung der Fig. 4 ist also nur die Vorwärtsgangstufe 5 eingelegt.

Ein Weiterdrehen in der ersten Drehrichtung nach F führt dazu, dass die Vorwärtsgangstufe 5 ausgelegt wird. In Fig. 5 ist gezeigt, dass keine der Vorwärtsgangstufen des ersten Teilgetriebes eingelegt ist. Die beiden Mitnehmer 46, 48 befinden sich beide jeweils auf ihren Neutrallinien 50, 52.

In Fig. 6 ist gezeigt, dass die Schaltwalze 28 in der ersten Drehrichtung 42 weitergedreht worden ist, bis im Bereich G des zweiten Gangabschnittes 56 die hohe Vorwärtsgangstufe 7 eingelegt ist. Der erste Mitnehmer 46 befindet sich auf der Neutrallinie 50.

Sofern ausgehend von dem in Fig. 6 gezeigten Zustand, bei dem die hohe Vorwärtsgangstufe 7 eingelegt, eine Mehrfach-Rückschaltung in die Vorwärtsgangstufe 3 durchzuführen ist, wird die Schaltwalze 28 in der zweiten Drehrichtung 44 verdreht, wie es in den nachfolgenden Figuren 7 bis 9 beschrieben ist.

Ausgehend von der in Fig. 6 gezeigten Position gelangen die Mitnehmer in die Stellung F (in Fig. 7 gestrichelt dargestellt), wobei aufgrund des verbreiterten Abschnittes 66 der Mitnehmer 48 nach wie vor in der ausgelenkten Position verbleibt, die der Vorwärtsgangstufe 7 entspricht, so dass die hohe Gangstufe 7 trotz des Verdrehens in der zweiten Drehrichtung 44 eingelegt bleibt.

In Fig. 7 ist auch gezeigt, dass der erste Mitnehmer 46 sich im Bereich des vierten Gangabschnittes (Weichen-Gangabschnitt) 60 befindet. Die Schaltkonturweiche 64 des vierten Gangabschnittes 60 kommt dabei derart zur Wirkung, dass der erste Mitnehmer 46 nicht ausgelenkt wird, die Vorwärtsgangstufe 5 also nicht eingelegt wird. Der verbreiterte Abschnitt 66 der zweiten Schaltkontur 32b überschneidet sich in axialer Richtung mit dem vierten Gangabschnitt 60, derart, dass auch in der Position E die Vorwärtsgangstufe 7 eingelegt bleibt, wie es in Fig. 7 dargestellt ist.

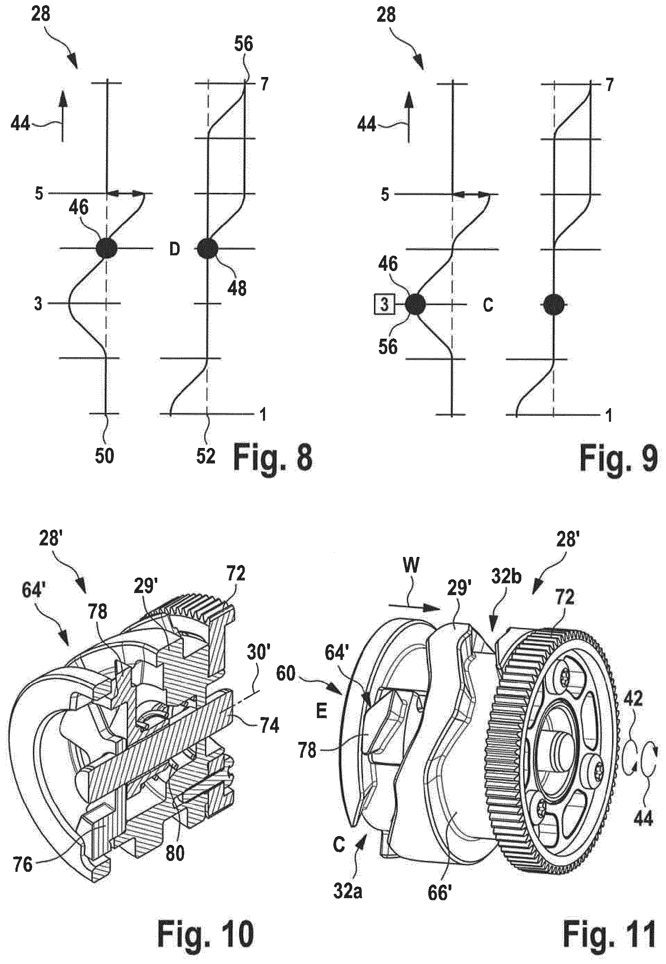

Ein Weiterdrehen in der zweiten Drehrichtung 44 führt dazu, dass die Mitnehmer in die Stellung D gelangen, wie es in Fig. 8 gezeigt ist, wobei die Gangstufe 5 ausgelegt bleibt und wobei die Vorwärtsgangstufe 7 ausgelegt ist. Die beiden Mitnehmer 46, 48 befinden sich in ihren jeweiligen Neutrallinien.

Ein Weiterdrehen aus dieser Position in der zweiten Drehrichtung 44 führt dazu, dass der erste Mitnehmer 46 im Bereich des zweiten Gangabschnittes 56 ausgelenkt wird, um die Vorwärtsgangstufe 3 einzulegen. Dies ist in Fig. 9 gezeigt, wobei die Darstellung der Fig. 9 der in Fig. 2 gezeigten Situation entspricht.

In den Figuren 10 und 11 ist eine nicht erfindungsgemäße Schaltwalze 28' dargestellt, die hinsichtlich Aufbau und Funktionsweise generell der Schaltwalze 28 entsprechen kann, die in den Figuren 2 bis 9 gezeigt ist. Gleiche Elemente sind daher durch gleiche Bezugszeichen angegeben.

In den Figuren 10 und 11 ist gezeigt, dass die Schaltwalze einen Schaltwalzenkörper 29' aufweist, an dessen einem axialen Ende ein Antriebsrad 72 festgelegt ist, bspw. durch eine Mehrzahl über den Umfang verteilt angeordneten Schrauben. Das Antriebsrad 72 kann bspw. eine Stirnradverzahnung aufweisen, wie dargestellt, die mit einer Stirnradverzahnung eines Antriebsritzels in Eingriff steht, das mit einer Antriebswelle eines elektrischen Schaltwalzenmotors verbunden ist, so dass die Schaltwalze 28' in beiden Drehrichtungen antreibbar ist.

Die Schaltwalze 28' weist ferner eine Walzenwelle 74 auf, die koaxial zu der ersten Drehachse 30' angeordnet ist. Die Walzenwelle 74 ist fest mit einem Drehkörper 76 verbunden. Die Verbindung ist insbesondere in Drehrichtung fest, bspw. durch Aufschrumpfen oder dergleichen. Der Drehkörper 76 ist in Umfangsrichtung mit dem Schaltwalzenkörper 29' gekoppelt, vorzugsweise ist der Drehkörper 76 auch in axialer Richtung an der Walzenwelle 74 gesichert. Vorzugsweise ist der Drehkörper 76 aus Kunststoff.

An der Walzenwelle 74 ist ein Weichenkörper 78 axial verschieblich gelagert und mittels einer Feder 80 in eine in den Figuren gezeigte Grundposition gegen den Drehkörper vorgespannt. Der Weichenkörper 78 ist Teil einer Schaltkonturweiche 64', die im Bereich der ersten Schaltkontur 32a ausgebildet ist, vorliegend bspw. im Bereich der Umfangsposition E entsprechend einem vierten Gangabschnitt 60 für die mittlere Vorwärtsgangstufe 5.

Der Weichenkörper 78 ist, wie es insbesondere in Fig. 11 erkennbar ist, so geformt, dass ein in die erste Schaltkontur 32a greifender Mitnehmer in der ersten Drehrichtung des Schaltwalzenkörpers 29' im Bereich des vierten Gangabschnittes 60 ausgelenkt wird. In der entgegengesetzten zweiten Drehrichtung 44 hintergreift der Mitnehmer eine Tasche des Weichenkörpers 78 und lenkt den Weichenkörper 78 gegen die Vorspannung der Feder 80 in eine Richtung W aus. Hierdurch kann der Mitnehmer 46 in der zweiten Drehrichtung 44 des Schaltwalzenkörpers 29 den vierten Gangabschnitt 60 durchfahren, ohne dass der Mitnehmer 46 ausgelenkt wird. Folglich wird in der zweiten Drehrichtung 44 die zugeordnete mittlere Gangstufe nicht eingelegt.

In Fig. 11 ist ferner ein verbreiterter Abschnitt 66' der zweiten Schaltkontur 32b dargestellt.

Obgleich vorliegend bislang eine Schaltwalze 28 bzw. 28' beschrieben worden ist, die den ungeraden Vorwärtsgangstufen zugeordnet ist, versteht sich, dass die gleiche Schaltwalze auch geraden Vorwärtsgangstufen zugeordnet sein kann, derart, dass der erste Gangabschnitt bspw. einer Rückwärtsgangstufe entspricht, der zweite Gangabschnitt 56 bspw. einer Vorwärtsgangstufe 6 entspricht, der dritte Gangabschnitt 58 bspw. einer niedrigen Vorwärtsgangstufe 2 entspricht, und der vierte Gangabschnitt 60 bspw. einer mittleren Vorwärtsgangstufe 4 zugeordnet ist.

In den nachfolgenden Figuren ist die erfindungsgemäße Ausführungsform einer Schaltwalze dargestellt, die anstelle von zwei axial versetzten Schaltkonturen 32a, 32b eine Einzelschaltkontur aufweist. Dies ist anhand eines Beispiels der zweiten Schaltwalze 34 erläutert, die dem Teilgetriebe mit den geraden Vorwärtsgangstufen zugeordnet ist. Die nachfolgend erläuterten Ausführungsformen von zweiten Schaltwalzen 34" lassen sich ebenfalls in dem Doppelkupplungsgetriebe 14 der Fig. 1 integrieren.

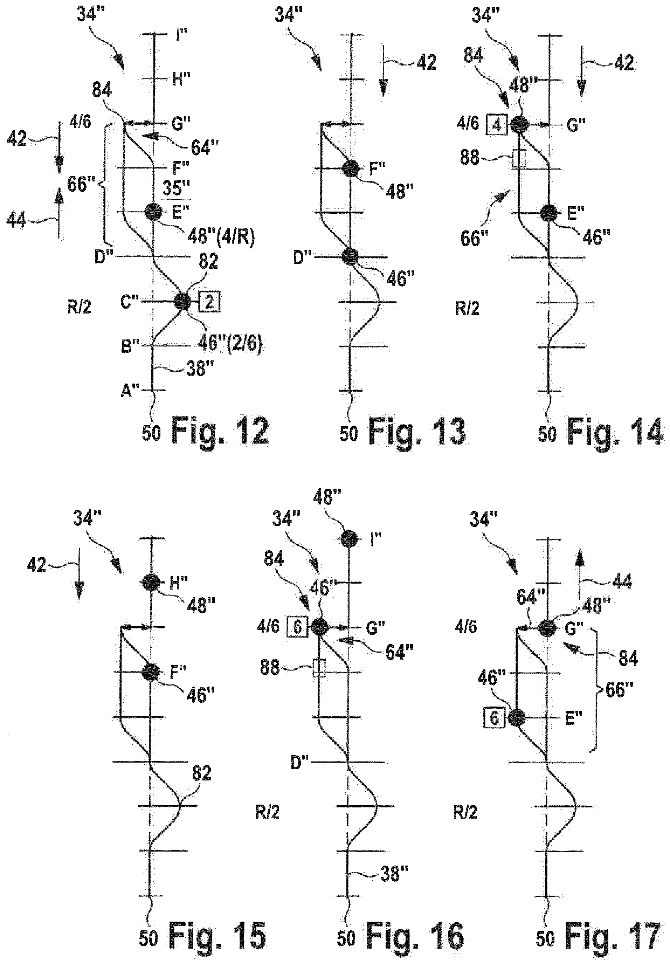

In Fig. 12 ist eine derartige Schaltwalze 34" schematisch in einer Abwicklung dargestellt. Die Schaltwalze 34" weist eine Einzelschaltkontur 38" mit einer Neutrallinie 50 auf. Ferner beinhaltet die Einzelschaltkontur 38" einen ersten Gangabschnitt 82, der gegenüber der Neutrallinie 50 nach rechts versetzt ist, sowie einen zweiten Gangabschnitt 84, der gegenüber der Neutrallinie 50 in die entgegengesetzte Axialrichtung versetzt ist. Die Einzelschaltkontur 38" erstreckt sich über einen Umfangsabschnitt und ist in Einzelpositionen A", B", C", ..., ..., H", I" unterteilt.

Der erste Gangabschnitt 82 liegt auf der Position C". Der zweite Gangabschnitt 84 liegt auf der Position G". In die Einzelschaltkontur 38" greifen ein erster Mitnehmer 46", der den Vorwärtsgangstufen 2, 6 zugeordnet ist, sowie ein zweiter Mitnehmer 48", der der Vorwärtsgangstufe 4 und der Rückwärtsgangstufe zugeordnet ist. Der Umfangsabstand der Mitnehmer 46", 48" entspricht dem halben Abstand zwischen den zwei Gangabschnitten 82, 84. Wenn der erste Mitnehmer 46" sich in den zweiten Gangabschnitt 84 befindet, liegt der zweite Mitnehmer 48" auf der Position I". Wenn der zweite Mitnehmer 48" im Bereich des ersten Gangabschnittes 82 liegt, befindet sich der erste Mitnehmer 46" in der Position A".

Der erste Gangabschnitt 82 ist der Rückwärtsgangstufe und der niedrigen Vorwärtsgangstufe 2 zugeordnet. Der zweite Gangabschnitt 84 ist der mittleren Gangstufe 4 und der hohen Gangstufe 6 zugeordnet. Der zweite Gangabschnitt 84 ist als Weichen-Gangabschnitt mit einer Schaltkonturweiche 64" ausgebildet. Ferner erstreckt sich ausgehend von dem zweiten Gangabschnitt 84 in Richtung hin zu dem ersten Gangabschnitt 82 ein verbreiterter Abschnitt 66", dessen Funktion jenem verbreiterten Abschnitt 66 der Ausführungsform der Figuren 2 bis 11 entspricht.

In Fig. 12 ist eine Situation gezeigt, wobei sich der erste Mitnehmer 46" im Bereich des ersten Gangabschnittes 82 befindet, so dass die niedrige Vorwärtsgangstufe 2 eingelegt ist. Der zweite Mitnehmer 48" befindet sich im Bereich der Position E", und zwar auf der Neutrallinie 50.

In den nachfolgenden Figuren 13 bis 16 wird zunächst beschrieben, wie ausgehend von der in Fig. 12 gezeigten Situation die hohe Vorwärtsgangstufe 6 eingelegt wird, wobei zwischenzeitlich die mittlere Gangstufe 4 eingelegt wird.

Zu diesem Zweck wird die zweite Schaltwalze 34" in der ersten Drehrichtung 42 verdreht, derart, dass der erste Mitnehmer 46" in die Position D" gelangt und der zweite Mitnehmer 48" in die Position F", so dass beide Mitnehmer auf der Neutrallinie angeordnet sind und keine Gangstufe eingelegt ist. Ausgehend von dieser in Fig. 13 gezeigten Situation wird die zweite Schaltwalze 34" in der ersten Drehrichtung 42 weitergedreht, derart, dass der zweite Mitnehmer 48" in die Drehposition G" gelangt, also im Bereich des zweiten Gangabschnittes 84 so ausgelenkt wird, dass die mittlere Vorwärtsgangstufe 4 eingelegt wird. Der erste Mitnehmer 46" befindet sich dabei in der Position E", also auf der Neutrallinie 50.

Ein Weiterdrehen aus der in Fig. 14 gezeigten Position führt zu der in Fig. 15 gezeigten Darstellung, bei der der erste Mitnehmer 46" in der Drehposition F" angeordnet ist und bei der der zweite Mitnehmer 48" in der Drehposition H" angeordnet ist, also keine Gangstufe eingelegt ist. Beide Mitnehmer 46", 48" befinden sich hierbei auf der Neutrallinie 50.

In Fig. 16 ist die Situation gezeigt, bei der der erste Mitnehmer 46" sich in der Drehposition G" befindet, also im Bereich des zweiten Gangabschnittes 84. Hierbei wird die hohe Vorwärtsgangstufe 6 eingelegt. Der zweite Mitnehmer 48" befindet sich auf der Neutrallinie 50 der Einzelschaltkontur 38", und zwar in der Drehposition I".

Ausgehend von dieser Position, bei der die hohe Vorwärtsgangstufe 6 eingelegt ist, soll anschließend eine Mehrfach-Rückschaltung in die niedrige Gangstufe 2 durchgeführt werden. Dies wird anhand der Figuren 17 bis 19 erläutert.

Zu diesem Zweck wird die Schaltwalze 34" in der zweiten Drehrichtung 44 verdreht, so dass der zweite Mitnehmer 48" in die Drehposition G" gelangt. Aufgrund der Funktion der Schaltkonturweiche 64" wird der zweite Mitnehmer 48" in diesem Bereich des zweiten Gangabschnittes 84 nicht ausgelenkt, so dass die mittlere Vorwärtsgangstufe 4, der der zweite Mitnehmer 48" zugeordnet ist, nicht eingelegt wird.

Zum anderen verbleibt der erste Mitnehmer 46" aufgrund des verbreiterten Abschnittes 66" in der ausgelenkten Position, so dass die hohe Vorwärtsgangstufe 6 eingelegt bleibt. Dies ist in Fig. 17 gezeigt, wobei der erste Mitnehmer 46" sich in der Drehposition E" befindet.

Ein Weiterdrehen der zweiten Schaltwalze 34" in der zweiten Drehrichtung 44 führt dazu, dass der erste Mitnehmer 46" in die Drehposition D" gelangt. Der zweite Mitnehmer 48" liegt dann in der Drehposition F". Für beide Drehpositionen befinden sich die Mitnehmer jeweils auf der Neutrallinie 50, so dass keine Gangstufe geschaltet ist.

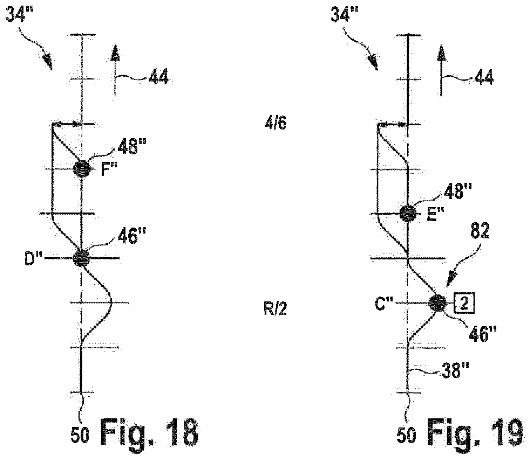

Ein Weiterdrehen in der zweiten Drehrichtung 44 führt aus der in Fig. 18 gezeigten Situation zu der in Fig. 19 gezeigten Situation, bei der der erste Mitnehmer 46" sich in der Drehposition C" befindet, entsprechend dem ersten Gangabschnitt 82, derart, dass die niedrige Vorwärtsgangstufe 2 eingelegt ist. Der zweite Mitnehmer 48 befindet sich in der Drehposition E", so dass keine entsprechende Gangstufe ist, da sich der zweite Mitnehmer 48" in der Neutrallinie 50 befindet.

Auch bei der zweiten Schaltwalze 34" kann folglich eine schnelle Mehrfach-Rückschaltung von einer hohen Gangstufe 6 in eine niedrige Gangstufe 2 durchgeführt werden, ohne die dazwischenliegende mittlere Gangstufe 4 einzulegen. Ferner kann die hohe Gangstufe über einen relativ langen Zeitraum geschaltet bleiben, so dass der Zeitraum, für den die Schaltwalze 34" eine Zugkraftunterbrechung benötigt, um von der hohen Vorwärtsgangstufe 6 in die niedrige Gangstufe 2 zu schalten, relativ kurz ist.

In Fig. 14 ist schematisch dargestellt, dass dem verbreiterten Abschnitt 66" ein Auslegesteg 88 vorzugsweise zugeordnet ist.

Der Auslegesteg 88 wirkt selektiv auf die Mitnehmer 46", 48", und zwar auf folgende Art und Weise. Der Auslegesteg 88 ist vorzugsweise im Bereich zwischen den Drehpositionen G" und D" angeordnet.

Für den ersten Mitnehmer 46" hat dieser Auslegesteg 88 oder eine sonstige Auslegekontur keine Wirkung. Dies führt dazu, dass aus der in Fig. 16 gezeigten Position bei Einleiten der zweiten Drehrichtung 44 der erste Mitnehmer 46" in seiner ausgelenkten Position verbleibt, wenn er den Auslegesteg 88 überfährt.

Der Auslegesteg 88 wirkt jedoch mit dem zweiten Mitnehmer 48" zusammen. Ausgehend aus der in Fig. 14 gezeigten Situation, bei der sich der zweite Mitnehmer 48" in dem Bereich des zweiten Gangabschnittes 84 befindet, könnte anstelle eines Weiterdrehens in der ersten Drehrichtung 42 (was zu der Situation der Fig. 15 führen würde) auch ein Umkehren der Drehrichtung erfolgen. In diesem Fall wird ausgehend aus der in Fig. 14 gezeigten Situation der zweite Mitnehmer 48" mittels des Auslegesteges 88 aus der ausgelenkten Position innerhalb des verbreiterten Abschnittes 66" in die nicht ausgelenkte Position, also auf die Neutrallinie 50 zurückgeführt, so dass die Vorwärtsgangstufe 4, die in der Fig. 14 eingelegt ist, ausgelegt wird, bevor mittels des ersten Mitnehmers 46" die niedrige Vorwärtsgangstufe 2 eingelegt wird.

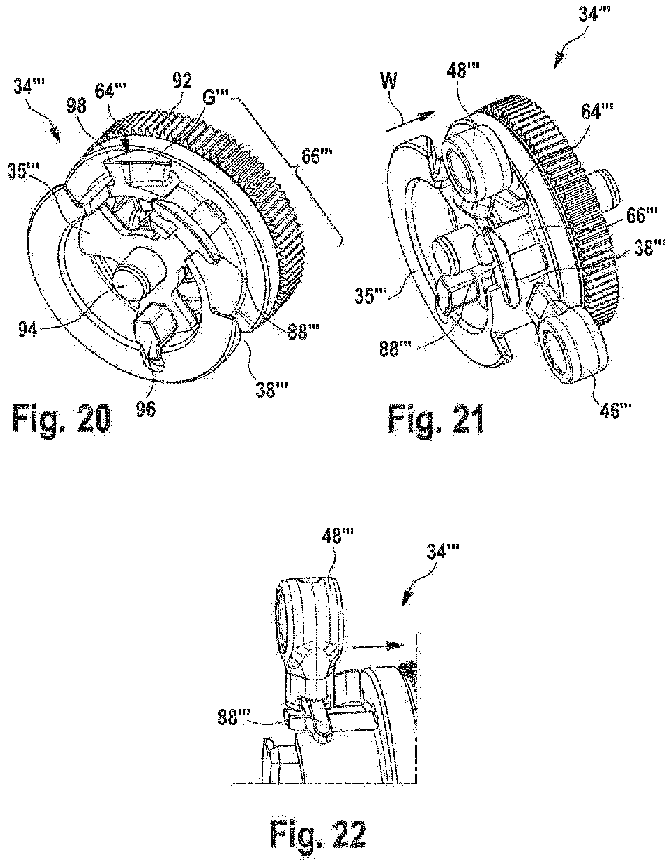

In den Figuren 20 bis 22 ist eine Ausführungsform einer zweiten Schaltwalze 34"' gezeigt, die hinsichtlich Aufbau und Funktionsweise generell der Schaltwalze 34" der Figuren 12 bis 19 entspricht. Gleiche Elemente sind daher durch gleiche Bezugszeichen gekennzeichnet. Im Folgenden werden im Wesentlichen die Unterschiede erläutert.

Die zweite Schaltwalze 34"' weist einen zweiten Schaltwalzenkörper 35"' auf, an dessen einem axialen Ende ein Antriebsrad 92 festgelegt ist, ähnlich wie bei der Ausführungsform der Figuren 10 und 11.

Ferner beinhaltet die zweite Schaltwalze 34"' eine Walzenwelle 94, an der, wie auch bei der Ausführungsform der Figuren 10 und 11 ein Weichenkörper 98 axial verschieblich ist, und zwar vorgespannt mittels einer Feder 100 in eine Grundposition, die es ermöglicht, dass ein Mitnehmer, der sich bei der ersten Drehrichtung 42 dem zweiten Gangabschnitt 84 nähert, mittels des Weichenkörpers 78 ausgelenkt wird, um die jeweilige Gangstufe einzulegen.

Andererseits ist der Weichenkörper 98 so ausgebildet, dass in der entgegengesetzten Drehrichtung ein sich dem zweiten Gangabschnitt 84 nähernder Mitnehmer den Weichenkörper 98 auslenkt, und zwar in einer Richtung W, ähnlich wie bei der Ausführungsform der Figuren 10 und 11.

In den Figuren ist dargestellt, dass in die Einzelschaltkontur 38"' zwei Mitnehmer 46'", 48'" greifen.

Ferner ist gezeigt, dass im Bereich eines verbreiterten Abschnittes 66'" ein Auslegesteg 88'" angeordnet ist, der selektiv nur auf den ersten Mitnehmer 46'" wirkt, um diesen ggf. aus der geschalteten Position zum Einlegen der mittleren Vorwärtsgangstufe 4 in Richtung der Neutrallinie 50 zurück zu zwingen, bevor mittels des ersten Mitnehmers 46‴ die niedrige Vorwärtsgangstufe 2 eingelegt wird.

Die zweite Schaltwalze 34" wurde als eine Schaltwalze beschrieben, die Vorwärtsgangstufen 2, 4, 6 und einer Rückwärtsgangstufe zugeordnet ist. In gleicher Weise kann die zweite Schaltwalze 34" auch ungeraden Gangstufen zugeordnet sein, wobei bspw. der erste Mitnehmer 46" den Vorwärtsgangstufen 7, 3 zugeordnet ist und wobei der zweite Mitnehmer 48" der Vorwärtsgangstufe 5 und optional einer Anfahrgangstufe 1 zugeordnet ist.

## Patentansprüche

1. Schaltwalze (28; 34) für ein automatisiertes Doppelkupplungsgetriebe (14), mit einem Schaltwalzenkörper (29; 35), der um eine Drehachse (30; 36) drehbar in dem Schaltgetriebe (14) montiert ist, wobei an dem Schaltwalzenkörper (29; 35) wenigstens eine Schaltkontur (32; 38) ausgebildet ist, die sich über einen Umfangsabschnitt (40) des Schaltwalzenkörpers (29; 35) erstreckt, wobei die Schaltwalze (28; 34) zum Schalten von drei über die Schaltwalze schaltbaren Gangstufen mit einer hohen Gangstufe (7; 6) zum Schalten eines hohen Gangs, einer niedrigen Gangstufe (3; 2) zum Schalten eines niedrigen Gangs und einer mittleren Gangstufe (5; 4) zum Schalten eines Gangs, der sich zwischen dem hohen und dem niedrigen Gang befindet, ausgebildet ist, wobei die wenigstens eine Schaltkontur (32; 38) in einem Bereich von einem Weichen-Gangabschnitt eine Schaltkonturweiche (64) aufweist, wobei der Weichen-Gangabschnitt (60; 84) der mittleren Gangstufe (5; 4) zugeordnet ist, wobei der Weichen-Gangabschnitt (60; 84) mittels der Schaltkonturweiche (64) so ausgebildet ist, dass die mittlere Gangstufe (5; 4) in einer ersten Drehrichtung (42) des Schaltwalzenkörpers (29, 35) geschaltet und in einer zweiten Drehrichtung (44) nicht geschaltet wird, wobei die wenigstens eine Schaltkontur (32; 38) ferner so ausgebildet ist, dass in der zweiten Drehrichtung (44) des Schaltwalzenkörpers (29; 35) die hohe Gangstufe (7; 6) eingelegt bleibt, wenn sich ein Mitnehmer (48), der der mittleren Gangstufe (5; 4) zugeordnet ist, in einem Bereich des Weichen-Gangabschnittes (60; 84) befindet, so dass ausgehend von der hohen Gangstufe (7; 6) die niedrige Gangstufe (3; 2) ohne Schalten der mittleren Gangstufe (5; 4) zu schalten ist **dadurch gekennzeichnet, dass** die Schaltkontur eine Einzelschaltkontur (38") aufweist, in die ein erster Mitnehmer (46") und ein zweiter Mitnehmer (48") greifen, wobei der erste Mitnehmer 46" der hohen Gangstufe (7;6) zugeordnet ist und wobei der zweite Mitnehmer (48") der mittleren Gangstufe (5;4) zugeordnet ist.

2. Schaltwalze nach Anspruch 1, **dadurch gekennzeichnet, dass** die Schaltkonturweiche (64) des Weichen-Gangabschnittes (60; 84) als passive Weiche ausgebildet ist.

3. Schaltwalze nach Anspruch 1 oder 2, **dadurch gekennzeichnet, dass** die wenigstens eine Schaltkontur (32; 38) einen axial verbreiterten Abschnitt (66) aufweist.

4. Schaltwalze nach Anspruch 1, **dadurch gekennzeichnet, dass** der erste Mitnehmer (46") der niedrigen Gangstufe (3, 2) zugeordnet ist.

5. Schaltwalze nach Anspruch 1 oder 4, **dadurch gekennzeichnet, dass** die Einzelschaltkontur (38") einen Gangabschnitt (84) mit einer Schaltkonturweiche (64"; 64"') aufweist, der in einer ersten Drehstellung den Weichen-Gangabschnitt für die mittlere Gangstufe (5;4) bildet, und der in einer zweiten Drehstellung einen Gangabschnitt für die hohe Gangstufe (7;6) bildet.

6. Schaltwalze nach Anspruch 4, wobei eine Verdrehbarkeit des Schaltwalzenkörpers (35") begrenzt ist, derart, dass der erste Mitnehmer (46") in einer ersten Drehrichtung (42) maximal bis zu dem Weichen-Gangabschnitt (84) gelangt.

7. Schaltwalze nach einem der Ansprüche 1 oder 4 bis 6, **dadurch gekennzeichnet, dass** die Einzelschaltkontur (38") und der zweite Mitnehmer (48") so aufeinander abgestimmt sind, dass der zweite Mitnehmer (48"), bei einer Verdrehung des Schaltwalzenkörpers (35") in der zweiten Drehrichtung (44) aus dem Weichen-Gangabschnitt (84) heraus, in einem verbreiterten Abschnitt (66"; 66"') der Einzelschaltkontur (38"; 38‴) axial versetzt wird, um die mittlere Gangstufe (5;4) , auszulegen bevor die niedrige Gangstufe (3;2) geschaltet wird.

8. Doppelkupplungsgetriebe (14) für ein Kraftfahrzeug, mit einer Eingangswellenanordnung (21, 25), einer Ausgangswellenanordnung (27) und einer Mehrzahl von Radsätzen, die mittels einer Schaltanordnung (S) schaltbar sind, die eine Schaltwalze nach einem der Ansprüche 1 - 7 aufweist.

9. Doppelkupplungsgetriebe nach Anspruch 8, wobei das Doppelkupplungsgetriebe (14) mit einem ersten Teilgetriebe (22) und einem zweiten Teilgetriebe (26) aufgebaut ist, wobei die Schaltwalze (28; 34) einem der zwei Teilgetriebe (22, 26) zugeordnet ist.

## Claims

1. Selector drum (28; 34) for an automated dual clutch transmission (14), having a selector drum body (29; 35), which is mounted in the manual transmission (14) so as to be rotatable about an axis of rotation (30; 36), wherein at least one shifting contour (32; 38) is formed on the selector drum body (29; 35), said shifting contour extending over a peripheral portion (40) of the selector drum body (29; 35), wherein the selector drum (28; 34) is designed for shifting three gear stages that can be shifted via the selector drum, comprising a high gear stage (7; 6) for shifting a high gear, a low gear stage (3; 2) for shifting a low gear and a middle gear stage (5; 4) for shifting a gear which is between the high and the low gear, wherein the at least one shifting contour (32; 38) has a shifting contour switch (64) in a region of a switch gear portion, wherein the switch gear portion (60; 84) is assigned to the middle gear stage (5; 4), wherein the switch gear portion (60; 84) is designed, by means of the shifting contour switch (64), in such a way that the middle gear stage (5; 4) is shifted in a first direction of rotation (42) of the selector drum body (29, 35) and is not shifted in a second direction of rotation (44), wherein the at least one shifting contour (32; 38) is also designed in such a way that, in the second direction of rotation (44) of the selector drum body (29; 35), the high gear stage (7; 6) remains engaged if a driver (48) assigned to the middle gear stage (5; 4) is in a region of the switch gear portion (60; 84), such that, proceeding from the high gear stage (7; 6), the low gear stage (3; 2) can be shifted without shifting the middle gear stage (5; 4), **characterized in that** the shifting contour has an individual shifting contour (38"), in which a first driver (46") and a second driver (48") engage, wherein the first driver (46") is assigned to the high gear stage (7; 6) and wherein the second driver (48") is assigned to the middle gear stage (5; 4).

2. Selector drum according to Claim 1, **characterized in that** the shifting contour switch (64) of the switch gear portion (60; 84) is designed as a passive switch.

3. Selector drum according to Claim 1 or 2, **characterized in that** the at least one shifting contour (32; 38) has an axially widened portion (66).

4. Selector drum according to Claim 1, **characterized in that** the first driver (46") is assigned to the low gear stage (3, 2).

5. Selector drum according to Claim 1 or 4, **characterized in that** the individual shifting contour (38") has a gear portion (84) with a shifting contour switch (64"; 64"') which, in a first rotational position, forms the switch gear portion for the middle gear stage (5; 4) and which, in a second rotational position, forms a gear portion for the high gear stage (7; 6).

6. Selector drum according to Claim 4, wherein a rotatability of the selector drum body (35") is limited, such that the first driver (46") reaches no further than the switch gear portion (84) in a first direction of rotation (42).

7. Selector drum according to any one of Claims 1 or 4 to 6, **characterized in that** the individual shifting contour (38") and the second driver (48") are matched to one another in such a way that, when the selector drum body (35") is rotated out of the switch gear portion (84) in the second direction of rotation (44), the second driver (48") is moved axially in a widened portion (66"; 66"') of the individual shifting contour (38"; 38"') in order to disengage the middle gear stage (5; 4) before the low gear stage (3; 2) is shifted.

8. Dual clutch transmission (14) for a motor vehicle, having an input shaft arrangement (21, 25), an output shaft arrangement (27) and a plurality of gearsets, which can be shifted by means of a shift arrangement (S) which has a selector drum according to any one of Claims 1 - 7.

9. Dual clutch transmission according to Claim 8, wherein the dual clutch transmission (14) is constructed with a first component transmission (22) and a second component transmission (26), wherein the selector drum (28; 34) is assigned to one of the two component transmissions (22, 26).

## Revendications

1. Barillet de sélection (28 ; 34) pour une boîte de vitesses automatisée à double embrayage (14), comportant un corps de barillet de sélection (29 ; 35) qui est monté rotatif autour d'un axe de rotation (30 ; 36) dans la boîte de vitesses manuelle (14), au moins un contour de passage de vitesse (32 ; 38) étant réalisé sur le corps de barillet de sélection (29 ; 35), lequel contour s'étend sur une partie périphérique (40) du corps de barillet de sélection (29 ; 35), le barillet de sélection (28 ; 34) étant réalisé pour le passage de trois rapports de vitesse pouvant être passés par le biais du barillet de sélection, comportant un rapport de vitesse élevé (7 ; 6) pour le passage d'une vitesse élevée, un rapport de vitesse bas (3 ; 2) pour le passage d'une vitesse basse et un rapport de vitesse central (5 ; 4) pour le passage d'une vitesse qui se trouve entre la vitesse élevée et la vitesse basse, l'au moins un contour de passage de vitesse (32 ; 38) présentant un aiguillage de contour de passage de vitesse (64) dans une zone à partir d'une partie de vitesse d'aiguillage, la partie de vitesse d'aiguillage (60 ; 84) étant associée au rapport de vitesse central (5 ; 4), la partie de vitesse d'aiguillage (60 ; 84) étant réalisée au moyen de l'aiguillage de contour de passage de vitesse (64) de telle sorte que le rapport de vitesse central (5 ; 4) est passé dans un premier sens de rotation (42) du corps de barillet de sélection (29, 35) et n'est pas passé dans un deuxième sens de rotation (44), l'au moins un contour de passage de vitesse (32 ; 38) étant en outre réalisé de telle sorte que, dans le deuxième sens de rotation (44) du corps de barillet de sélection (29 ; 35), le rapport de vitesse élevé (7 ; 6) demeure enclenché lorsqu'un élément d'entraînement (48) qui est associé au rapport de vitesse central (5 ; 4) se trouve dans une zone de la partie de vitesse d'aiguillage (60 ; 84), de sorte qu'à partir du rapport de vitesse élevé (7 ; 6), le rapport de vitesse bas (3 ; 2) doit être passé sans passage du rapport de vitesse central (5 ; 4), **caractérisé en ce que** le contour de passage de vitesse présente un contour de passage de vitesse individuel (38") dans lequel viennent en prise un premier élément d'entraînement (46") et un deuxième élément d'entraînement (48"), le premier élément d'entraînement (46") étant associé au rapport de vitesse élevé (7 ; 6) et le deuxième élément d'entraînement (48") étant associé au rapport de vitesse central (5 ; 4).

2. Barillet de sélection selon la revendication 1, **caractérisé en ce que** l'aiguillage de contour de passage de vitesse (64) de la partie de vitesse d'aiguillage (60 ; 84) est réalisé sous forme d'aiguillage passif.

3. Barillet de sélection selon la revendication 1 ou 2, **caractérisé en ce que** l'au moins un contour de passage de vitesse (32 ; 38) présente une partie (66) élargie axialement.

4. Barillet de sélection selon la revendication 1, **caractérisé en ce que** le premier élément d'entraînement (46") est associé au rapport de vitesse bas (3, 2).

5. Barillet de sélection selon la revendication 1 ou 4, **caractérisé en ce que** le contour de passage de vitesse individuel (38") présente une partie de vitesse (84) dotée d'un aiguillage de contour de passage de vitesse (64" ; 64"') qui, dans une première position de rotation, forme la partie de vitesse d'aiguillage pour le rapport de vitesse central (5 ; 4) et, dans une deuxième position de rotation, forme une partie de vitesse pour le rapport de vitesse élevé (7 ; 6).

6. Barillet de sélection selon la revendication 4, une aptitude à la rotation du corps de barillet de sélection (35") étant limitée de telle sorte que le premier élément d'entraînement (46") parvienne au maximum jusqu'à la partie de vitesse d'aiguillage (84) dans un premier sens de rotation (42).

7. Barillet de sélection selon l'une des revendications 1 ou 4 à 6, **caractérisé en ce que** le contour de passage de vitesse individuel (38") et le deuxième élément d'entraînement (48") sont adaptés l'un à l'autre de telle sorte que le deuxième élément d'entraînement (48"), dans le cas d'une rotation du corps de barillet de sélection (35") dans le deuxième sens de rotation (44) hors de la partie de vitesse d'aiguillage (84), soit décalé axialement dans une partie élargie (66" ; 66"') du contour de passage de vitesse individuel (38" ; 38"'), afin de désenclencher le rapport de vitesse central (5 ; 4) avant que le rapport de vitesse bas (3 :2) ne soit passé.

8. Boîte de vitesses à double embrayage (14) pour un véhicule à moteur, comportant un ensemble d'arbre d'entrée (21, 25), un ensemble d'arbre de sortie (27) et une pluralité de trains d'engrenages qui peuvent être commutés au moyen d'un ensemble de passage de vitesse (S) qui comprend un barillet de sélection selon l'une des revendications 1 à 7.

9. Boîte de vitesses à double embrayage selon la revendication 8, la boîte de vitesses à double embrayage (14) étant constituée d'une première boîte de vitesses partielle (22) et d'une deuxième boîte de vitesses partielle (26), le barillet de sélection (28 ; 34) étant associé à l'une des deux boîtes de vitesses partielles (22, 26).
